# EUROPÄISCHE PATENTSCHRIFT

(11) **EP 2 209 387 B1**
(45) Veröffentlichungstag und Bekanntmachung des Hinweises auf die Patenterteilung: **03.08.2011**
(21) Anmeldenummer: 08844031.8
(22) Anmeldetag: 21.10.2008
(51) Int. Cl.: A23J 1/14

(54) **VERFAHREN ZUR GEWINNUNG EINER PROTEINHALTIGEN LEBENSMITTELZUTAT AUS LEINSCHROT**
METHOD FOR PRODUCING A PROTEIN-CONTAINING FOOD INGREDIENT CONSISTING OF FLAX COARSE MEAL
PROCÉDÉ DE PRODUCTION D'UN INGRÉDIENT ALIMENTAIRE À BASE DE PROTÉINES, À PARTIR DE GRUAU DE LIN

(30) Priorität: 31.10.2007 DE 102007052406; 21.08.2008 DE 102008039103
(43) Veröffentlichungstag der Anmeldung: 28.07.2010
(73) Patentinhaber: Fraunhofer-Gesellschaft zur Förderung der angewandten Forschung e.V., 80686 München (DE)
(72) Erfinder: MÜLLER, Klaus, 85356 Freising (DE); EISNER, Peter, 85354 Freising (DE); PICKARDT, Claudia, 85354 Freising (DE); SCHOTT, Michael, 85416 Langenbach (DE); KAISER, Heinz, 12619 Berlin (DE)
(86) Internationale Anmeldenummer: PCT/DE2008/001715
(87) Internationale Veröffentlichungsnummer: WO 2009/056097

(56) Entgegenhaltungen:
- WO-A-2005/012342
- US-A1- 2003 109 679
- US-A1- 2004 137 133
- MADHUSUDHAN K T ET AL: "STUDIES ON LINSEED LINUM-USITATISSIMUM PROTEINS" JOURNAL OF AGRICULTURAL AND FOOD CHEMISTRY, AMERICAN CHEMICAL SOCIETY. WASHINGTON.; US, Bd. 31, Nr. 5, 1. Januar 1983 (1983-01-01), Seiten 959-963, XP009084165 ISSN: 0021-8561

## Beschreibung

### Anwendungsgebiet

Die Erfindung betrifft ein Verfahren, mit dem aus Leinschrot eine Lebensmittelzutat gewonnen wird. Die Zutat enthält vorwiegend Proteine und lösliche Ballaststoffe und zeichnet sich durch geschmackliche Neutralität, hohe Löslichkeit, grenzflächenstabilisierende Eigenschaften in Schäumen und Emulsionen sowie durch Lagerstabilität aus.

### Stand der Technik

Leinsamen sind aus einer äußeren Schale, einem Keim, einem dünnen Endosperm sowie zwei großen Kotyledonen aufgebaut. Die abgeflachten Kotyledonen nehmen dabei 57 %, die äußere Schale und das Endosperm 38 % der Gesamtmasse des Samens ein. Die restlichen 5 % bildet der Keim des Leinsamens. In den Kotyledonen sind 75 % des Leinöls, sowie der Großteil der Proteine gespeichert. Samenschale und Endosperm enthalten 22 % des Gesamtöls, lediglich 3 % liegen im Keim vor. Die Polysaccharide oder auch Schleimstoffe der Leinsamen sind überwiegend in den äußeren Bereichen der Schale lokalisiert. Die Saat der Ölleinpflanze enthält bis ca. 45 % Öl, 25-35 % Protein und 25-40 % Nichtstärke-Polysaccharide, von denen etwa ein Drittel lösliche Ballaststoffe sind. Alle prozentualen Anteile in der vorliegenden Patentanmeldung beziehen sich hierbei auf Gewichtsprozent.

Ganze oder teilweise aufgebrochene Leinsamen finden im Teig und als Bestreumaterial von Backwaren sowie in Müsli und Reformhausprodukten Verwendung. Der Einsatz von Leinsamen in Backwaren erfolgt großteils wegen seiner optisch-sensorischen Eigenschaften, wohingegen bei Reformhausprodukten die physiologische Wirkung, die hauptsächlich auf die Schleimstofffraktion zurückzuführen ist, im Vordergrund steht. Der größte Teil der Leinsamen wird zur industriellen Leinölgewinnung verarbeitet. Das bei der Leinölgewinnung als Nebenprodukt anfallende Leinschrot besitzt einen hohen Gehalt an Proteinen und Ballaststoffen und wird bisher hauptsächlich als Futter- oder Düngemittel verwendet, da aufgrund des hohen Anteils hoch ungesättigter Fettsäuren im Restölanteil des Leinschrotes (2-4%) rasch chemisch oder enzymatisch bedingter Fettverderb auftritt, der zu Ranzigkeit führt. Der Einsatz von Leinschrot in Lebensmitteln findet deshalb keine industrielle Anwendung.

Die Ballaststoffe in Leinsamen lassen sich in wasserlösliche Nicht-Stärke-Polysaccharide (so genannte Schleimstoffe oder lösliche Ballaststoffe) und unlösliche Ballaststoffe wie Lignin, Cellulose und Hemicellulose unterteilen. Die löslichen Ballaststoffe machen etwa ein Drittel der Gesamtballaststoffe aus und besitzen eine neutrale (vor allem Arabinoxylan) und eine saure Fraktion, die hauptsächlich Galacturonsäure, Rhamnose und Galactose enthält. Präparate aus löslichen Ballaststoffen weisen in Abhängigkeit von Extraktionsparametern und Herkunft des Rohstoffs einen Restproteingehalt von 4-15 % auf.

Viele der positiven physiologischen Eigenschaften, die den Leinsamen zugeschrieben werden, sind auf die Fraktion der löslichen Ballaststoffe zurückzuführen. Sie erhöhen die Viskosität des Chymus im Dünndarm und können so den postbrandialen Blutglucosespiegel abflachen. Die stuhlgangregulierende Wirkung von Leinsamenpräparaten wird ebenfalls mit den löslichen Ballaststoffen in Verbindung gebracht.

Die Schwankungen im Proteingehalt von Leinsamen sind auf genetische Faktoren und unterschiedliche Wachstumsbedingungen zurückzuführen. Die Löslichkeit der in Leinsamen vorkommenden Stickstoffverbindungen ist mitunter abhängig von Lösungsmittel, pH-Wert und Temperatur. Zwischen 20 % und 24 % des Gesamtstickstoffs ist am Löslichkeitsminimum (pH 3,5-3,8) löslich, was mit dem hohen Gehalt an sauer löslichen Albuminfraktionen zu erklären ist. Leinsamenproteine bestehen zu 40,2 % aus Albuminen und zu 40,0 % aus Globulinen. Der Rest setzt sich aus Glutelin (13,3 %) und Prolamin (6,5 %) zusammen. Das Verhältnis von essentiellen zu Gesamtaminosäuren liegt bei Leinproteinen über dem von der WHO vorgeschlagenen Wert von 36 %.

Mit klassischen Proteinextraktionsmethoden können Leinsamenproteine mit Salzlösungen und Fällungsmethoden aus Leinmehl isoliert, aufgereinigt und aufkonzentriert werden, um Proteinisolate zu erhalten. Proteinisolate zeichnen sich durch einen hohen Proteingehalt von > 90% aus. Auch Vorgehensweisen zur alkalischen Extraktion aus teilentfettetem Leinmehl in Kombination mit einer Säurefällung bzw. Fällung am isoelektrischen Punkt oder alkoholischen Fällung des Proteins und der löslichen Ballaststoffe im Extrakt, Separation des Präzipitats und Trocknung sind bekannt. Für die Herstellung von Proteinkonzentraten, die einen geringeren Proteingehalt als Isolate aufweisen, werden üblicherweise wässrige alkoholische Lösungen eingesetzt.

Ein Vorteil von Proteinisolaten liegt in der hohen Aufreinigung und Aufkonzentrierung des Proteinanteils durch einen oder mehrere Waschvorgänge. Proteinisolate sind aufgrund des hohen Reinheitsgrades und des hohen Proteinanteils (> 90 %) meist sensorisch akzeptabel und für Lebensmittelanwendungen gut geeignet. Je geringer der Proteinanteil desto intensiver wird meist der Eigengeschmack der Produkte und desto weniger gut ausgeprägt ist in der Regel das funktionelle Profil. Proteinkonzentrate mit Proteingehalten von 60 bis 80 % weisen meist geringere Löslichkeiten sowie deutlich schwächer ausgeprägte Grenzflächeneigenschaften (Erzeugung und Stabilisierung von Schäumen und Emulsionen) aus als Isolate.

Aufgrund des hohen Oxidationspotenzials restlicher Fettanteile können die Isolate und Konzentrate allerdings in kurzer Zeit ranzig werden und sind dann für den Einsatz in Lebensmitteln nicht mehr geeignet. Darüber hinaus wird die Funktionalität von Proteinen durch die Vorbehandlung des Rohstoffs, durch Fällungsprozesse oder durch die Behandlung mit Alkohol stark beeinflusst. Insbesondere werden die Löslichkeit und Grenzflächeneigenschaften wie Schaumvermögen oder Emulsionsstabilisierung vermindert.

Gute Proteinlöslichkeiten liegen vor, wenn die Löslichkeit im Neutralbereich größer als 60 % ist. Als Indiz für ausgezeichnete Schaumeigenschaften werden üblicherweise die Schaumaktivität, die Schaumdichte und die Schaumstabilität herangezogen. In der Lebensmittelindustrie verwendete Aufschlagmittel zur Erzeugung von Schäumen weisen Aktivitäten von 1000 bis 2000 % auf bei Dichtewerten von etwa 50 bis 150 g/l. Gewünscht sind hohe Aktivität und Stabilität bei niedrigen Schaumdichte. Nachteil häufig verwendeter Aufschlagmittel auf Basis pflanzlicher Rohstoffe ist die geringe Stabilität der Schäume. Nach 60 Minuten Standzeit ist das zunächst erzeugte Schaumvolumen meist um mehr als 90 % reduziert.

Als Indiz für ausgezeichnete Emulgiereigenschaften werden Emulgierkapazität und Emulsionsstabilität herangezogen. Die Emulgierkapazitäten häufig eingesetzter Proteinisolate liegen im Bereich von 300 bis 600 ml Öl/Gramm Protein. In Verbindung mit der Menge an Öl, die durch das Protein in der Emulsion stabilisiert werden kann (Emulgierkapazität), ist die zeitliche Stabilität einer definiert zusammengesetzten Emulsion von maßgebender Bedeutung. Dazu wird ein Teil Protein mit jeweils 10 Teilen Wasser und Öl (1:10:10) emulgiert und es wird geprüft, welche Ölmenge sich aus der Emulsion abtrennt. Für die Anwendung von Proteinisolaten in emulsionsbasierten Lebensmittelsystemen sind hohe Emulgierkapazitäten und hohe Emulsionsstabilitäten gewünscht.

Aufwändig hergestellte Proteinisolate erfüllen die o.g. Anforderungen aufgrund der spezifisch erforderlichen Vorbehandlung der Rohstoffe und der Vorgehensweise bei der Aufreinigung der Proteinisolate häufig nicht in allen Punkten.

Lagerstabile Produkte aus pflanzlichen Rohstoffen mit ausgezeichneten sensorische Eigenschaften in Verbindung mit ausgezeichneten Löslichkeiten und Grenzflächeneigenschaften gibt es bislang nicht.

Nachfolgende Tabelle 1 zeigt beispielhaft Eigenschaften von durch isoelektrische Fällung gewonnenen Proteinisolaten aus Soja, Erbsen und Lein sowie die Eigenschaften typischer Aufschlagmittel zur Herstellung von Lebensmittelschäumen.

**Tabelle 1**

| | Proteinlöslichkeit | Emulgierkapazität | Emulsionsstabilität | Schaumaktivität | Schaumdichte | Schaumstabilität |
|---|---|---|---|---|---|---|
| Muster | [%] | [g/ml] | [%] | [%] | [g/l] | [%] |
| Sojaproteinisolat | 24 | 445 | 54 | - | - | - |
| Erbsenproteinisolat | 23 | 350 | n.b. | 490 | 193 | 84 |
| Leinproteinisolat | 48 | 535 | 97,5 | 910 | 120 | 100 |
| Weizenproteinhydrolysat (Aufschlagmittel) | 100 | 375 | n.b. | 2100 | 41 | 825 |
| Hühnereiklar (Aufschlagmittel) | 100 | 800 | 52 | 1800 | 53 | 80 |

Die Aufgabe der vorliegenden Erfindung besteht darin, aus Leinschrot eine geschmacklich neutrale, technologisch funktionelle und lagerstabile proteinhaltige Lebensmittelzutat zu gewinnen. Die Zutat soll sich durch gute Proteinlöslichkeit und ausgezeichnete Grenzflächeneigenschaften auszeichnen, um Lebensmittelschäume und -emulsionen herstellen und stabilisieren zu können. Darüber hinaus soll die getrocknete Zutat lagerstabil sein, d.h. während der Lagerung sollen keine sensorischen Veränderungen auftreten, die einen Einsatz in Lebensmitteln nicht mehr ermöglichen würden.

Die Veröffentlichung von D.K.Dev and E. Quensel.: "Preparation and Functional Properties of Linseed Protein Products Containing Differing Levels of Mucilage", Journal of Food Science, 53(6), 1834-1837, 1857 (1988) offenbart die Extraktion von Proteinen und Schleimstoffen aus einem entfetteten Leinsaatmehl in einer NaOH-Lösung bei einem pH-Wert von 9.5 - 10.0 und (isoelektrische) Fällung mit HCl bei einem pH-Wert von 4.2 - 4.5. Der Proteingehalt der gewonnenen Präparate liegt bei 63 - 65%; der Gehalt an löslichen Schleimstoffen liegt bei 7%.

Die Veröffentlichung von Krause, J.P. et al.: "Effect of extraction conditions on composition, surface activity and rheological properties of protein isolates from flaxseed (Linum usitativissimum L), J. Sci. Food Agric., 82, 970-976 (2002)) befasst sich mit den Auswirkungen der Extraktionsbedingungen bei zwei unterschiedlichen Herstellungsverfahren auf die Zusammensetzung, die Oberflächenaktivität und die rheologischen Eigenschaften von Proteinisolaten aus Leinsaat.). Beide Verfahren reduzieren den Gehalt an Schleimstoffen und Phytinsäure im Proteinisolat im Vergleich zum Ausgangsstoff wesentlich. Der Schleimstoffgehalt beträgt 2,3% bzw. 0,6%.

Die WO 96/22027 offenbart ein Verfahren zur Herstellung eines Proteinprodukts mit hohem Schleimstoffanteil (20-45%), bei dem Proteine und Schleimstoffe aus entfettetem Leinschrot im alkalischen Milieu (pH-Wert 8 bis 12) extrahiert werden. Die Fällung des Proteine und Schleimstoffe erfolgt dabei durch Zugabe einer Säure und eines niedrigen Alkanols.

### Darstellung der Erfindung

Die Aufgabe wird mit dem Verfahren nach Anspruch 1 gelöst. Vorteilhafte Ausgestaltungen des Verfahrens sind Gegenstand der abhängigen Patentansprüche oder lassen sich der nachfolgenden Beschreibung entnehmen.

Bei dem vorgeschlagenen Verfahren wird zunächst Leinschrot mit einem Restölgehalt von ≤ 1% erzeugt oder bereitgestellt. Hierzu kann beispielsweise bei der industriellen Leinölherstellung anfallendes Leinschrot, das häufig Restölgehalte zwischen 3 und 4 % aufweist, geeignet nachentölt werden. Weiterhin kann auch von kaltgepresstem Leinpresskuchen ausgegangen werden, aus dem durch Entölung bis auf den geforderten Restölgehalt das Leinschrot erhalten wird. Alternativ kann auch Leinschrot mit einem Restölgehalt von ≤ 5% erzeugt oder bereitgestellt werden, wenn dieser anschließend unter Ausschluss von Luftsauerstoff vermahlen wird. Aus dem Leinschrot werden dann Teile von nativem Leinprotein und löslichen Ballaststoffen, die im Leinschrot enthalten sind, durch wässrige Extraktion in einer wässrigen Phase gelöst oder zumindest dispergiert. Bei der wässrigen Extraktion wird im Extraktionsmedium ein pH-Wert von unter pH = 7 eingestellt. Der dadurch erhaltene wässrige Totalextrakt wird von unlöslichen Leinschrotfraktionen, bspw. von unlöslichen Fasern, befreit. Aus der wässrigen Phase wird dann ein Lein-Protein-Ballaststoff-Gemisch abgetrennt wird, wodurch die Lebensmittelzutat ohne weitere Aufreinigung erhalten wird. Die Abtrennung erfolgt durch einen Trocknungsschritt, wobei es von Vorteil ist, das Lein-Protein-Ballastsoff-Gemisch vor der Trocknung durch Filtration und/oder Eindampfen aufzukonzentrieren, um eine effizientere Trocknung zu erreichen.

Überraschenderweise zeigt der von unlöslichen Bestandteilen, insbesondere Fasern, befreite und getrocknete Totalextrakt auch ohne weitere Aufreinigung und Aufkonzentrierung des Proteinanteils erstaunlich gute geschmackliche und grenzflächenaktive Eigenschaften, wie sie sonst nur bei hoch konzentrierten und gereinigten Proteinisolaten zu finden sind. Darüber hinaus weist diese Lebensmittelzutat eine hohe Löslichkeit des Proteinanteils sowie lange Lagerfähigkeit auf, ohne dass sensorischer Verderb durch Oxidation auftritt.

Besonders vorteilhaft ist die Verwendung von kaltgepresstem Leinpresskuchen in Kombination mit einer schonenden Restentölung des Presskuchens bis auf 1 % Restfett oder darunter in Verbindung mit einer anschließenden Kaltvermahlung des Leinschrotes unter Ausschluss von Luftsauerstoff. Diese Kombination ermöglicht eine rein wässrige Extraktion von nativem Leinprotein und löslichen Leinballaststoffen mit ausgezeichneten geschmacklichen und funktionellen Eigenschaften sowie langer Lagerstabilität. Eine schonende Entölung wird erreicht, indem die erforderliche Desolventierung des bei der Entölung eingesetzten Lösungsmittels bei Temperaturen durchgeführt wird, bei denen die Proteine nicht geschädigt werden. Die Kaltvermahlung erfolgt in diesem wie auch im Fall des Leinschrots mit einem Restölgehalt von ≤ 5% vorzugsweise bis auf eine Partikelgröße von 200 bis 1000 µm bei einer durchschnittlichen Partikelgröße von d50 = 400 µm.

Als besonders vorteilhaft zur Erhaltung der nativen Eigenschaften des Leinproteins bei der Herstellung der Lebensmittelzutat hat sich die Nachentölung des kaltgepressten Leinpresskuchens oder des Leinschrotes mit Hexan auf Restölgehalte unter 1 % in Verbindung mit der Desolventierung des nachentölten Leinschrotes bei Temperaturen unter 60 °C erwiesen.

Durch die schonende Verarbeitung des kaltgepressten Leinpresskuchens oder Leinschrotes kann ein hoher Anteil des nativen Leinproteins in Wasser zusammen mit löslichen Ballaststoffen dispergiert und gelöst und als Totalextrakt von unlöslichen Leinfasern abgetrennt werden. Besonders vorteilhaft für die Gewinnung großer Mengen nativen Leinproteins ist, wenn bei der Extraktion im Extraktionsmedium ein pH-Wert von unter pH = 7 eingestellt wird. Insbesondere zeigt sich bei Einstellung von pH-Werten unter pH = 7 eine deutliche Verbesserung der geschmacklichen Eigenschaften und der Lagerstabilität des faserfreien Totalextraktes, der mit schonenden Verfahrensschritten eingeengt und getrocknet wird, beispielsweise durch Ultrafiltration und/oder Vakuumeindampfung und anschließende Sprühtrocknung.

Das getrocknete Pulver ist eine Lebensmittelzutat mit weniger als 60 % nativem Leinprotein und mehr als 30 % löslichen Ballaststoffen. Die Löslichkeit des Proteins in der so gewonnenen Lebensmittelzutat liegt über 60 % und unterscheidet sich damit erstaunlicherweise deutlich positiv von den durch isoelektrische Fällung gewonnenen Proteinisolaten (siehe Tabelle 1). Darüber hinaus führt überraschenderweise die Kombination von nativem Leinprotein hoher Löslichkeit und löslichen Leinballaststoffen in der neuen Lebensmittelzutat auch bei einem Proteinanteil von weniger als 60 % zu einer Schaumaktivität von mehr als 1100 % bei einer Schaumdichte von 94 g/l und einer Schaumstabilität von 100 %, was sich wiederum deutlich positiv von den Schaumeigenschaften der durch isoelektrische Fällung gewonnenen Proteinisolate unterscheidet. Auch in Bezug auf die Emulsionsstabilität weist die neue Lebensmittelzutat trotz des niedrigen Proteinanteils erstaunlich hohe Werte von 98 % auf, sowie Emulgierkapazitäten, die im Bereich von Proteinisolaten liegen (350 ml/g).

Aufgrund der guten geschmacklichen Eigenschaften, der ausgezeichneten Funktionalität in Bezug auf Löslichkeit, Schaumeigenschaften und Emulgiereigenschaften, sowie aufgrund der langen Stabilität gegenüber oxidativem Verderb und damit langen Lagerfähigkeit, eignet sich die neue Lebensmittelzutat als überraschend vielfältig einsetzbares Food Ingredient zur Verbesserung von Qualitätsmerkmalen von Lebensmitteln, die sonst nur durch den Einsatz von Proteinisolaten erreicht werden kann. Dies betrifft vor allem sensorische Eigenschaften (Geschmack, Geruch, Farbe), Textureigenschaften (Viskosität, Struktur, Gelbildung, Stabilität von Emulsionen und Schäumen) sowie die Verlängerung von Haltbarkeit. Besonders hervorzuheben sind hierbei die Anreicherung und Stabilisierung von Getränken, die Struktur- und Texturverbesserung von Backwaren und Feinen Backwaren sowie die Ausbildung und Stabilisierung von Schäumen und Emulsionen im Bereich der Süßwaren und Desserts oder Feinkostprodukte.

### Ausführungsbeispiel

Industriell hergestellter Leinpresskuchen wird durch Extraktion mit technischem Hexan auf Restölgehalte unter 1 % eingestellt.

Der Perkolator der Extraktionsanlage wird dazu mit 100 kg des Leinpresskuchens gefüllt und anschließend in mehreren Durchläufen extrahiert. Dabei wird im ersten Durchlauf mit 200 l Hexan und in den weiteren Durchläufen mit jeweils 150 l Hexan bei durchschnittlich 45°C während 4 Stunden extrahiert. Die Perkolation erfolgt von oben nach unten, wobei der Füllstand des Perkolators derart eingestellt ist, dass der Presskuchen vollständig mit Hexan bedeckt wird. Sobald weniger als 1 % Restfett im Schrot erreicht sind, schließt sich an die Extraktion die Entfernung des Extraktionsmittels durch Strippen des Leinexpellers mit überkritischem Hexandampf an. Dazu wird während 4 Stunden mit insgesamt 550 kg Hexandampf bei einem Vakuum von -0,6 bar gestrippt bis eine Brüdentemperatur von 40 °C erreicht ist. Es folgt ein einstündiges Strippen mit Lebensmitteldampf bei 60°C und einem Vakuum von -0,75 bar.

Der desolventierte Leinexraktionsschrot wird mittels einer gekühlten Mühle unter Stickstoffatmosphäre auf Partikelgrößen unter 400 µm vermahlen und für die Gewinnung der erfindungsgemäßen Lebensmittelzutat verwendet. Ein Teil Leinschrot wird dazu mit 12 Teilen Wasser von 50 °C versetzt und suspendiert. Der pH-Wert des Ansatzes wird mit 3m Natronlauge auf 8 eingestellt und intensiv gerührt. Nach 60 Minuten wird mittels Dekanter (Durchsatz 1000 l/h) bei einer Drehzahl von 4400 U/min und einem Gegendruck von 3,5 bar die unlösliche Faser vom proteinhaltigen Extrakt abgetrennt. Der Extrakt wird mit 3m Salzsäure auf einen pH-Wert von 6,8 eingestellt und in einem Fallstromverdampfer bei maximal 75 °C und einem Vakuum von -0,6 bar auf eine Konzentration von ca. 20 % Trockenmasse eingedampft und anschließend in einem Sprühtrockner bei 180 °C Lufteintrittstemperatur getrocknet. Das getrocknete Pulver stellt die erfindungsgemäße Lebensmittelzutat dar.

## Patentansprüche

1. Verfahren zur Herstellung einer proteinhaltigen Lebensmittelzutat, bei dem
- entweder Leinschrot mit einem Restölgehalt von ≤ 1% erzeugt oder bereitgestellt wird,
- oder Leinschrot mit einem Restölgehalt von ≤ 5% erzeugt oder bereitgestellt und anschließend unter Ausschluss von Luftsauerstoff vermahlen wird,
- Teile von nativem Leinprotein und löslichen Ballaststoffen, die im Leinschrot enthalten sind, durch wässrige Extraktion in einer wässrigen Phase gelöst oder zumindest dispergiert werden, wodurch ein wässriger Totalextrakt erhalten wird, wobei bei der wässrigen Extraktion im Extraktionsmedium ein pH-Wert von unter pH = 7 eingestellt wird,
- der wässrige Totalextrakt von unlöslichen Leinschrotfraktionen befreit wird, und
- ein Lein-Protein-Ballaststoff-Gemisch aus der wässrigen Phase durch einen Trocknungsschritt abgetrennt wird, um damit die Lebensmittelzutat zu erhalten.

2. Verfahren nach Anspruch 1,
bei dem das Lein-Protein-Ballastsoff-Gemisch zur Abtrennung aus der wässrigen Phase durch Filtration und/oder Eindampfen aufkonzentriert und anschließend getrocknet wird.

3. Verfahren nach Anspruch 1 oder 2,
bei dem der Leinschrot mit einem Restölgehalt von ≤ 1% durch Entölung von Leinschrot mit einem höheren Restölgehalt erhalten wird.

4. Verfahren nach Anspruch 1 oder 2,
bei dem der Leinschrot mit einem Restölgehalt von 5 1% durch Entölung von kaltgepresstem Leinpresskuchen erhalten wird.

5. Verfahren nach Anspruch 3 oder 4,
bei dem eine Desolventierung des Leinschrotes von dem bei der Entölung eingesetzten Lösungsmittel bei Temperaturen unter 60 °C durchgeführt wird.

6. Verfahren nach einem der Ansprüche 3 bis 5,
bei dem die Entölung mit Hexan als Lösungsmittel erfolgt.

7. Verfahren nach einem der Ansprüche 1 bis 6,
bei dem der Leinschrot vor der wässrigen Extraktion durch eine Kaltvermahlung unter Ausschluss von Luftsauerstoff zerkleinert wird.

8. Verfahren nach Anspruch 7,
bei dem die Kaltvermahlung bis auf eine Partikelgröße von 200 bis 1000 µm bei einer durchschnittlichen Partikelgröße von d50 = 400 µm erfolgt.

9. Verfahren nach einem der Ansprüche 1 bis 8,
bei dem das Lein-Protein-Ballaststoff-Gemisch aufkonzentriert und anschließend getrocknet wird, um ein getrocknetes Pulver zu erhalten, das weniger als 60 % natives Leinprotein und mehr als 30 % lösliche Ballaststoffe enthält.

10. Verfahren nach Anspruch 9,
bei dem das getrocknete Pulver eine Schaumaktivität von mehr als 1100 % aufweist.

## Claims

1. Method for producing a food ingredient containing protein, in which
• either coarse flax meal with a residual oil content of ≤1 % is generated or provided,
• or coarse flax meal with a residual oil content of ≤5% is generated or provided and then ground with the exclusion of oxygen from the air,
• parts of native flax protein and soluble dictary fibre contained in the coarse flax meal are dissolved or at least dispersed by aqueous extraction in an aqueous phase, as a result of which an aqueous total extract is obtained, wherein during the aqueous extraction a pH value of below pH = 7 is set in the extraction medium,
• insoluble coarse flax meal fractions are removed from the aqueous total extract, and
• a flax-protein-fibre mixture is separated from the aqueous phase by a dying step to thus obtain the food ingredient.

2. Method according to claim 1, in which for separation from the aqueous phase the flax-protein-fibre mixture is concentrated by filtration and/or evaporation and then dried.

3. Method according to claim 1 or 2, in which the coarse flax meal with a residual oil I content of ≤1% is obtained by dc-oiling coarse flax meal with a higher residual oil content.

4. Method according to claim 1 or 2, in which the coarse flax meal with a residual oil content of ≤1% is obtained by de-oiling cold-pressed flax press cake.

5. Method according to claim 3 or 4, in which a desolventising of the coarse flax meal from the solvent used during the de-oiling is conducted at temperatures below 60°C.

6. Method according to one of claims 3 to 9, in which the de-oiling is conducted with hexane as solvent.

7. Method according to one of claims 1 to 6, in which the coarse flax meal is crushed before the aqueous extraction by cold milling with the exclusion of oxygen from the air.

8. Method according to claim 7, in which the cold milling is conducted to a particle size of 200 to 1000 µm with an average particle size of d50 = 400 µm.

9. Method according to one of claims 1 to 8, in which the flax-protein-fibre mixture is concentrated and then dried to obtain a dried powder, which contains less than 60% native flax protein and more than 30% soluble dietary fibre.

10. Method according to claim 9, in which the dried powder has a foam activity of more than 1100%.

## Revendications

1. Procédé de préparation d'un ingrédient alimentaire renfermant des protéines selon lequel :
- soit on fabrique ou prépare du tourteau de lin ayant une teneur en huile résiduelle ≤ 1%,
- soit on fabrique ou prépare du tourteau de lin ayant une teneur en huile résiduelle ≤ 5% puis, on le broie en l'absence d'oxygène de l'air,
- on dissout ou au moins disperse dans une phase aqueuse des fractions de protéines de lin natives et fibres alimentaires solubles renfermées dans le tourteau de lin par extraction aqueuse, de façon à obtenir un extrait total aqueux, lors de l'extraction aqueuse dans le milieu d'extraction, une valeur de pH inférieure à pH = 7 étant réglée,
- on libère l'extrait total aqueux des fractions insolubles du tourteau de lin, et,
- on sépare un mélange protéines de lin-fibres alimentaires de la phase aqueuse par une étape de séchage pour obtenir ainsi un ingrédient alimentaire.

2. Procédé conforme à la revendication 1,
selon lequel
le mélange protéines de lin-fibres alimentaires est concentré par filtration et/ou évaporation pour le séparer de la phase aqueuse, puis séché.

3. Procédé conforme à la revendication 1 ou à la revendication 2,
selon lequel
le tourteau de lin ayant une teneur en huile résiduelle ≤ 1% est obtenu par déshuilage de tourteau de lin ayant une teneur en huile résiduelle supérieure.

4. Procédé conforme à la revendication 1 ou à la revendication 2,
selon lequel
le tourteau de lin ayant une teneur en huile résiduelle ≤ 1% est obtenu par déshuilage d'un gâteau de lin comprimé à froid.

5. Procédé conforme a la revendication 3 ou à la revendication4, selon lequel
on élimine du tourteau de lin, le solvant mis en oeuvre lors du déshuilage à des températures inférieures à 60°C.

6. Procédé conforme à l'une des revendications 3 à 5,
selon lequel
le déshuilage est mis en oeuvre avec de l'hexane en tant que solvant.

7. Procédé conforme à l'une des revendications 1 à 6,
selon lequel
avant l'extraction aqueuse, le tourteau de lin est fragmenté par broyage à froid en l'absence d'oxygène de l'air.

8. Procédé conforme à la revendication 7,
selon lequel
le broyage à froid est effectué jusqu'à une granulométrie de 200 à 1000 µm avec une granulométrie moyenne d50 = 400 µm.

9. Procédé conforme à l'une des revendications 1 à 8,
selon lequel
le mélange protéines de lin-fibres alimentaires est concentré puis séché pour obtenir une poudre séchée renfermant moins de 60 % de protéines de lin natives et plus de 30 % de fibres alimentaires solubles.

10. Procédé conforme à la revendication 9,
selon lequel
la poudre séchée présente un pouvoir moussant de plus de 1100 %.
